# EUROPÄISCHE PATENTSCHRIFT

(11) **EP 2 399 042 B1**
(45) Veröffentlichungstag und Bekanntmachung des Hinweises auf die Patenterteilung: **26.08.2015**
(21) Anmeldenummer: 10704509.8
(22) Anmeldetag: 11.02.2010
(51) Int. Cl.: F16D 69/02

(54) **VERFAHREN ZUR HERSTELLUNG EINES BREMSBELAGES, BREMSBELAG**
METHOD FOR PRODUCING A BRAKE LINING, BRAKE LINING
PROCÉDÉ DE FABRICATION D'UNE GARNITURE DE FREIN, GARNITURE DE FREIN

(30) Priorität: 17.02.2009 DE 102009009131
(43) Veröffentlichungstag der Anmeldung: 28.12.2011
(73) Patentinhaber: TMD Friction Services GmbH, 51381 Leverkusen (DE)
(72) Erfinder: DILNOT, Andrew, 51381 Leverkusen (DE); JAGAR, Christina, 51377 Leverkusen (DE); SEVERIT, Petra, 66549 Limburg a,d.Lahn (DE)
(74) Vertreter: Müller, Eckhard
(86) Internationale Anmeldenummer: PCT/EP2010/000822
(87) Internationale Veröffentlichungsnummer: WO 2010/094421

(56) Entgegenhaltungen:
- EP-A1- 1 233 203
- EP-A1- 1 394 438
- JP-A- 61 106 687
- US-A- 4 743 634
- US-A- 5 433 774
- US-A- 5 989 390

## Beschreibung

### Technisches Gebiet

Die Erfindung betrifft ein Verfahren zur Herstellung eines Reibbelages einer Bremsbacke sowie einen entsprechenden Reibbelag einer Bremsbacke.

### Stand der Technik

Im Stand der Technik sind vielfältige Verfahren zur Herstellung eines Reibbelages einer Bremsbacke bekannt.

Reibbeläge lassen sich unterschiedlichen Kategorien zuordnen, beispielsweise metallische Reibbeläge, organische Reibbeläge, Reibbeläge mit niedrigem Metallanteil sowie keramische Reibbeläge. Die Klassifikation der Reibbeläge hängt ab von der Wahl des Reibmaterials.

Die Reibbeläge enthalten eine Vielzahl unterschiedlicher Substanzen mit unterschiedlichen Funktionen. Ein Bestandteil sind Reibmaterialien, die für einen Hauptbestandteil des Reibungskoeffizienten zwischen Bremsbacke und Gegenpart, beispielsweise Trommelbremse oder Scheibenbremse, verantwortlich sind. Des Weiteren werden Füllstoffe und Bindemittel verwendet.

Die Füllstoffe haben ebenfalls unterschiedliche Aufgaben. Eine der Aufgaben ist, eine Schmierung bereitzustellen, die eine Reduktion des Bremsgeräusches sowie eine Verbesserung des Komforts bewirkt. Aus dem Stand der Technik ist bekannt, zur Verbesserung von Komforteigenschaften der Reibbeläge Metallsulfide und Buntmetalle als Schmiermittel einzusetzen. Die Materialien müssen jedoch in den Füllstoffen mit vergleichsweise großen Mengen vorliegen, was aufgrund des hohen Preises der Rohstoffe zu einer erheblichen Verteuerung der Bremsbeläge führt.

EP 1 394 438 A1 offenbart ein aus zwei Schichten aufgebautes Reibmaterial. Dieses weist eine erste Schicht aus faserförmigen Basismaterial und eine zweite Schicht auf, welche reibungsmodifizierende Partikel enthält. Das faserförmige Basismaterial der ersten Schicht besteht aus gewebten und angewebten Materialien, u. a. Aramid-, Baumwoll- oder Cellulosefasern, oder aus faserförmigen Füllmaterialien wie Diatomeenerde, Graphit oder Silika. Dieses Material kann Poren im Bereich von 0,5 bis 20 µm aufweisen. Auf der ersten Schicht wird eine zweite Schicht aus reibungsmodifizierenden Partikeln, wie z. B. Silika, Celite oder Diatomeenerde, abgeschieden. Ein Harz dient zur Imprägnierung des Reibmaterials.

US 5,989,390 beschreibt ein Reibmaterial, welches auf ein Papiersubstrat aufgebracht wird und u.a. amorphe Diatomeenerde und Graphite enthalten kann. Zur Herstellung des Reibmaterials werden alle Komponenten zusammen in Waser aufgeschlämmt, und diese Schlämme werden in eine Papiermaschine gepumpt und auf das Papiersubstrat aufgebracht. Das so hergestellte Schleifpapier wird getrocknet und mit einem Harz gesättigt und imprägniert.

US 5,433,774 betrifft ein Reibmaterial, bei dessen Herstellung kein herkömmliches Bindemittel verwendet wird. Das Reibmaterial wird durch eine Polykondensation einer ersten Komponente (fein verteiltes SiO₂) mit einer zweiten Komponente (wasserlösliches Silikat) erzeugt. Es entsteht in Gegenwart von Wasser ein 3-dimensionales Netzwerk in Form eines festen Polysilikatgerüsts oder einer Polysilikatmatrix, die als inorganic silicate containing binder bezeichnet wird. Verschiedene Additive (Füller, Schmierstoffe, reibungsmodifizierende Substanzen) werden den beiden Komponenten zugesetzt, die während der Polykondensation gleichmäßig in das sich bildende Polysilikatgerüst eingebaut oder eingelagert werden.

### Aufgabe

Aufgabe der Erfindung ist es daher, ein Verfahren zur Herstellung eines Reibbelages, einen entsprechenden Reibbelag sowie eine Bremsbacke anzugeben, die gleiche oder verbesserte Komforteigenschaften haben, wie die aus dem Stand der Technik bekannten Reibbeläge, aber mit geringeren Mengen an Funktionsmaterialien auskommen als die aus dem Stand der Technik bekannten Reibbeläge.

### Darstellung der Erfindung

Die Aufgabe wird gelöst durch ein Verfahren zur Herstellung eines Reibbelages gemäß Anspruch 1, ein Reibmaterial gemäß dem nebengeordneten Anspruch 11 sowie durch die Bremsbacke gemäß dem nebengeordneten Anspruch 12. Vorteilhafte Weiterbildungen der Erfindung sind Gegenstand der Unteransprüche.

Ein erfindungsgemäßes Verfahren zur Herstellung eines Reibbelags einer Bremsbacke sieht vor, ein Trägermaterial zu verwenden, welches eine hohe offene Porosität aufweist. Ein solches Trägermaterial ist sehr gut geeignet zur Aufnahme von Funktionsstoffen in seinem Inneren oder in bis zum Rand reichenden Kavitäten.

Dem hochporösem Trägermaterial wird ein Bindemittel zugegeben und Trägermaterial und Bindemittel so lange vermischt, bis die offenen Oberflächen des Trägermaterials weitgehend mit dem Bindemittel benetzt sind. Das Bindemittel erleichtert die Aufnahme und die Anbindung von Funktionsstoffen an das Trägermaterial. Je vollständiger die Benetzung des Trägermaterials mit Bindemitteln ist, desto höher ist dessen Aufnahmefähigkeit für den Funktionsstoff.

Als Nächstes wird dem Trägermaterial-Bindemittel-Gemisch ein Funktionsstoff zugegeben, welcher von dem Trägermaterial bzw. von dem Trägermaterial-Bindemittel-Gemisch zumindest teilweise aufgenommen wird.

Das Verfahren stellt somit auf einfache Weise einen Reibbelag bereit, bei dem ein Funktionsstoff in ein Trägermaterial derart eingebracht ist, dass er sehr gut an dem Trägermaterial gebunden ist, und welcher gleiche oder gar verbesserte Eigenschaften, verglichen mit den aus dem Stand der Technik bekannten Reibbelägen bei wesentlich geringeren Funktionsstoffmengen ermöglicht. Durch das erfindungsgemäße sequenzielle Zufügen von Bindemittel zu einem Trägermaterial und dann dem Zufügen eines Funktionsstoffes zu dem Trägermaterial-Bindemittel-Gemisch kann erreicht werden, dass der Funktionsstoff besonders gut in das Trägermaterial einbringbar ist bzw. an dem Trägermaterial anhaftet.

Eine erste vorteilhafte Weiterbildung der Erfindung sieht vor, dass das Trägermaterial und das Bindemittel in einem Mischer homogenisiert werden. Auf diese Weise lässt sich die Menge an benötigtem Bindemittel reduzieren.

Bevorzugt wird das Bindemittel weiterhin als Bindemittellösung zugegeben, wodurch sich eine bessere Benetzung des Trägermaterials mit dem Bindemittel erreichen lässt.

Die Konzentration an Bindemittel in der Bindemittellösung beträgt bevorzugt zwischen 0,5 % und 50 %, besonders bevorzugt bei Bindemittel A zwischen 2 %und 8 %.

Ein weiterer Vorteil ergibt sich, wenn das Mischen von Trägermaterial und Bindemittel mit langsamer Geschwindigkeit vorgenommen wird. Auf diese Weise lässt sich einerseits das poröse Trägermaterial beim Mischen schonen und andererseits eine gleichmäßigere Benetzung mit der Bindemittellösung erreichen, da diese aufgrund der Viskosität der Bindemittellösung eine bestimmte Zeit benötigt, um die Oberfläche des Trägermaterials weitgehend zu benetzen.

Wenn der verwendete Mischer eine Mischschnecke oder eine drehbare Mischtrommel oder dergleichen aufweist, ist bevorzugt, dass die Mischtrommel oder Mischschnecke oder dergleichen mit niedrigen Umdrehungszahlen arbeiten.

Bevorzugt wird der Funktionsstoff mit einem derartigen Anteil zugegeben, dass das Material nach der Mischung, also nach Bindung des Funktionsstoffes an das Trägermaterial, nicht klebt und das benetzte Trägermaterial mit dem Funktionsstoff gesättigt ist. Auf diese Weise lässt sich eine gute Weiterverarbeitbarkeit des mit dem erfindungsgemäßen Verfahren hergestellten Reibbelagmaterials erreichen und gleichzeitig eine hohe Wirksamkeit des Funktionsstoffs in dem fertigen Reibbelag.

Eine weitere Weiterbildung der Erfindung sieht vor, dass die Mischung nach der Zugabe und Vermischung des Funktionsstoffes getrocknet wird. Dadurch lässt sich das Reibbelagmaterial besonders gut weiterverarbeiten.

Bevorzugt liegt die Restfeuchte nach dem Trocknen zwischen 0,3 % und 5 %, bevorzugt zwischen 0,7 % und 2 %. Besonders bevorzugt ist, wenn die Restfeuchte bei etwa 1 % liegt. Auf diese Weise lässt sich das Material besonders gut weiterverarbeiten.

Ein erster unabhängiger Gegenstand der Erfindung betrifft ein Reibmaterial für eine Bremsbacke eines Kraftfahrzeuges, welches ein Trägermaterial hoher offener Porosität aufweist, das mit einem Bindemittel benetzt und in das ein Funktionsstoff auf- oder eingebracht ist. Mit Hilfe eines derartigen Reibmaterials lässt sich ein Funktionsstoff in wesentlich geringerer Konzentration vorsehen als bei den aus dem Stand der Technik bekannten Reibmaterialien, wodurch sich der Preis für die Reibmaterialien erheblich senken lässt.

Das erfindungsgemäße Reibmaterial verfügt dennoch über gleichgute oder verbesserte, durch den Funktionsstoff bedingte Eigenschaften, da aufgrund des Trägermaterials der Funktionsstoff sehr gut freigebbar ist.

Bevorzugt beträgt der Benetzungsgrad des Trägermaterials mit Bindemittel zwischen 80 % und 100 %, bevorzugt zwischen 90 % und 100 %, insbesondere bevorzugt zwischen 98 % und 100 %. Je höher der Benetzungsgrad, also die flächenmäßige Abdeckung der Oberfläche des Trägermaterials mit Bindemittel, desto besser die Anbindung des Funktionsstoffs an das Trägermaterial.

Als geeignete Trägermaterialien haben sich solche Materialien erwiesen, die eine spezifische Oberfläche von 20 m²/g bis 80 m²/g aufweisen, bevorzugt 40 m²/g bis 70 m²/g, insbesondere bevorzugt 50 m²/g. Die spezifische Oberfläche des Trägermaterials bezieht sich auf das Trägermaterial ohne Benetzung mit einem Bindemittel. Durch die Benetzung mit dem Bindemittel wird die spezifische Oberfläche in der Regel verkleinert.

Bei höheren spezifischen Oberflächen muss die Porosität des Trägermaterials so hoch sein, dass dieses den mechanischen Belastungen im Bremsenbetrieb nicht mehr gewachsen ist, wobei mit geringeren spezifischen Oberflächen die Aufnahmefähigkeit für den Funktionsstoff nicht mehr ausreichend ist.

Mit etwa 50 m²/g lässt sich die Wirkung des Funktionsstoffs im Reibmaterial mit der einer direkten Einbringung des Funktionsstoffs in das Reibmaterial vergleichen.

Das Trägermaterial weist Korngrößen zwischen 90 µm und 1,5 mm auf, wodurch sich eine gute Verarbeitbarkeit des Reibmaterials ergibt.

Innerhalb der Grenzen zwischen 90 µm und 1,5 mm sind die Korngrößen des Trägermaterials bevorzugt normal verteilt. Durch eine normal verteilte Mischung der Korngrößen zwischen 90 µm und 1,5 mm lässt sich eine gute Verteilung des mit Funktionsstoff gefüllten Trägermaterials im Reibmaterial erreichen.

Das Mischen von Trägermaterial und Bindemittel erfolgt bevorzugt mit einer Oberflächengeschwindigkeit der Partikel von 5 m/sec bis 50 m/sec, bevorzugt von 10 m/sec bis 20 m/sec. Bei diesen Oberflächengeschwindigkeiten werden die porösen Bestandteile nicht beschädigt und die Qualität des Reibmaterials wird nicht herabgesetzt.

Bevorzugte Materialien für das Trägermaterial sind Diatomeen und Ton, insbesondere bevorzugt eine natürliche, kalzinierte Mischung aus Diatomeen und Ton. Ein derartiges Trägermaterial ist kostengünstig und weist sehr gute physikalische wie chemische Eigenschaften auf, sodass es sich leicht mit Bindemittel benetzen und mit Funktionsstoff füllen lässt. Des Weiteren ist eine natürliche, kalzinierte Mischung aus Diatomeen und Ton chemisch inert, temperaturbeständig bis ca. 1000 °C sowie ökologisch und toxikologisch unbedenklich.

Bevorzugt ist der Anteil des Funktionsstoffes in dem Reibmaterial derart gewählt, dass die Mischung aus Trägermaterial, Bindemittel und Funktionsstoff nicht klebend ist, und/oder dass das benetzte Trägermaterial mit dem Funktionsstoff gesättigt ist. Dies garantiert eine hohe Wirksamkeit des Funktionsstoffes im Trägermaterial und gleichzeitig eine gute Verarbeitbarkeit des Reibmaterials.

Wenn der Funktionsstoff weiterhin als Schmierstoff ausgebildet ist, lassen sich mit Hilfe des erfindungsgemäßen Reibmaterials besonders gute Komforteigenschaften bei einem geringen Einsatz von Schmiermitteln erreichen.

Bevorzugte Funktionsstoffe sind Metallsulfid, Grafit, Metalle oder Mischungen der vorgenannten Materialien insbesondere aber Molybdänsulfid. Derartige Funktionsstoffe haben eine gute Schmierwirkung und lassen sich gut in das poröse Trägermaterial einbringen.

Der Funktionsstoff liegt bevorzugt als Funktionsrohstoff oder als Funktionsmatrix vor.

Wenn das Bindemittel Stärke, organische und/oder anorganische Bestandteile enthält, lässt sich der weitere Vorteil erreichen, dass diese Materialien eine gute Bindung zwischen Funktionsstoff und Trägermaterial ergeben, wodurch sich die Wirksamkeit des Reibmaterials erhöhen.

Bevorzugt wird das Bindemittel als Bindemittellösung verwendet, wodurch sich ein höherer Benetzungsgrad des Trägermaterials mit Bindemitteln erreichen lässt.

Ein weiterer unabhängiger Gegenstand der Erfindung betrifft eine Bremsbacke mit einem Reibmaterial, das nach dem zuvor beschriebenen Verfahren zur Herstellung des Reibbelages hergestellt ist. Eine derartige Bremsbacke lässt sich mit vergleichbaren Eigenschaften wie herkömmlichen Bremsbacken mit wesentlich geringeren Anteilen an Funktionsstoffen ausstatten, wodurch der Preis einer derartigen Bremsbacke sinkt.

Ein letzter unabhängiger Gegenstand der Erfindung betrifft eine Bremsbacke mit einem Reibmaterial gemäß der zuvor beschriebenen Erfindung. Eine derartige Bremsbacke lässt sich mit vergleichbaren Eigenschaften wie herkömmlichen Bremsbacken mit wesentlich geringeren Anteilen an Funktionsstoffen ausstatten, wodurch der Preis einer derartigen Bremsbacke sinkt.

### Ausführungsbeispiel

Die Erfindung wird anhand eines Ausführungsbeispiels erläutert.

Zur Herstellung eines erfindungsgemäßen Reibmaterials wird eine natürliche, kalzinierte Mischung aus Diatomeen und Ton verwandt, deren Korngrößen zwischen 90 µm und 1,5 mm liegt. Die Korngrößenverteilung entspricht im Wesentlichen einer Normalverteilung zwischen diesen Grenzen.

Das Ausgangsmaterial hat eine spezifische Oberfläche von etwa 50 m²/g und eine hohe mechanische Belastbarkeit.

Das Trägermaterial wird zusammen mit einem Bindemittel in einem Mischer bei sehr geringer Geschwindigkeit homogenisiert, damit sich das Bindemittel gut auf und in dem Trägermaterial verteilt. Dazu liegt das Bindemittel in einer Lösung vor mit geeignetem Lösungsmittel, wobei die Konzentration zwischen 0,5 und 50 % beträgt. Als Ergebnis erhält man ein zu im Wesentlichen zu 100 % benetztes Trägermaterial, das eine sehr gute Haftfähigkeit für einzubringende Funktionsstoffe aufweist.

Nachdem das Trägermaterial vollständig mit dem Bindemittel benetzt ist, wird die Trägermaterial-Bindemittel-Mischung mit der Funktionsrohstoffmatrix gemischt. Die Funktionsrohstoffmatrix wird in einem solchen Anteil beigegeben, dass eine homogene, nichtklebende Masse entsteht, bei der das Trägermaterial mit der Funktionsrohstoffmatrix gesättigt ist.

Anschließend wird das mit der Funktionsrohstoffmatrix versehene Trägermaterial getrocknet, bis eine Restfeuchte von etwa 1 % erreicht ist.

Als bevorzugter Funktionsrohstoff ist Molybdänsulfid vorgesehen, der sich als geeigneter Ersatz für Antimontrisulfid herausgestellt hat. Zum einen oxidiert Antimontrisulfid bei höheren Temperaturen zum Antimontrioxid, welches in die Kanzerogenklasse 3 eingestuft ist, wobei Molybdänsulfid nicht kanzerogen wirkt. Des Weiteren zeigt Molybdänsulfid vergleichbare technische Eigenschaften wie Antimontrisulfid.

### Beispiel: Herstellung eines Trägermaterials gemäß dem erfindungsgemäßen Verfahren

Es werden 3990 Teile des Trägermaterials mit 2100 Teile Bindemittel (zum Beispiel Wasser und hydratisiertes Natriumsilikat im Verhältnis 1:1) in einen Mischer eingebracht und 5 min auf geringster oder geringer Stufe gemischt. Anschließend werden 350 Teile Molybdänsulfid, 490 Teile eines Mehrkomponetenschmierstoffes enthaltend beispielsweise Eisen-II-sulfid, Zinn-II-sulfid und/oder Titan-IV-sulfid, sowie 140 Teile Zinn-II-sulfid zugegeben und bei gleichbleibender Umdrehungszahl für weitere 2 min gemischt.

Nach Beendigung des Mischvorgangs wird die entstandene Mischung bei 100 °C getrocknet bis zu einer geringen Restfeuchte, z.B. 1 %.

## Patentansprüche

1. Verfahren zur Herstellung eines Reibbelages einer Bremsbacke bei dem einem offenporigen Trägermaterial mit hoher spezifischer Oberfläche und Korngrößen zwischen 90 µm und 1,5 mm, welches Diatomeen oder Ton oder eine kalzinierte Mischung aus Diatomeen und Ton enthält, ein Bindemittel zugegeben wird und Trägermaterial und Bindemittel so lange vermischt werden, bis das Trägermaterial weitgehend mit dem Bindemittel benetzt ist, wobei anschließend ein Funktionsstoff, welcher Metallsulfid, Graphit, Metalle oder Mischungen davon enthält, zugegeben wird, der von dem Trägermaterial zumindest teilweise aufgenommen wird.

2. Verfahren nach Anspruch 1, **dadurch gekennzeichnet, dass** Trägermaterial und Bindemittel in einem Mischer homogenisiert werden.

3. Verfahren nach Anspruch 1 oder 2, **dadurch gekennzeichnet, dass** das Bindemittel als Bindemittellösung zugegeben wird, deren Konzentration an Bindemittel in der Bindemittellösung zwischen 0,5 Gew.-% und 50 Gew.-% beträgt.

4. Verfahren nach einem der vorangegangenen Ansprüche, **dadurch gekennzeichnet, dass** das Mischen von Trägermaterial und Bindemittel mit einer Oberflächengeschwindigkeit der Partikel von 5 m/sec bis 50 m/sec erfolgt.

5. Verfahren nach einem der vorangegangenen Ansprüche, **dadurch gekennzeichnet, dass** die Mischung nach der Zugabe und Vermischung des Funktionsstoffes getrocknet wird.

6. Verfahren nach einem der vorangegangenen Ansprüche, **dadurch gekennzeichnet, dass** der Benetzungsgrad des Trägermaterials mit Bindemittel zwischen 80 % und 100 %liegt.

7. Verfahren nach einem der vorangegangenen Ansprüche, **dadurch gekennzeichnet, dass** das Trägermaterial eine spezifische Oberfläche von 20 m²/g bis 80 m²/g aufweist.

8. Verfahren nach einem der vorangegangenen Ansprüche, **dadurch gekennzeichnet, dass** die Korngrößen des Trägermaterials zwischen 90 µm und 1,5 mm liegen, wobei die Korngrößen des Trägermaterials zwischen diesen Grenzen normalverteilt sind.

9. Verfahren nach einem der vorangegangenen Ansprüche, **dadurch gekennzeichnet, dass** das Trägermaterial eine kalzinierte Mischung aus Diatomeen und Ton enthält.

10. Verfahren nach einem der vorangegangenen Ansprüche, **dadurch gekennzeichnet, dass** das Bindemittel Stärke, organische und/oder anorganische Bestandteile enthält.

11. Reibmaterial für eine Bremsbacke eines Kraftfahrzeuges, erhältlich nach einem der Ansprüche 1 bis 10.

12. Bremsbacke mit einem Reibmaterial nach Anspruch 11.

## Claims

1. Process for producing a friction lining of a brake shoe, wherein an open-pored support material which has a high specific surface area and particle sizes in the range from 90 µm to 1.5 mm and contains diatoms or clay or a calcined mixture of diatoms and clay is combined with a binder and support material and binder are mixed until the support material has been largely wetted by the binder, and a functional material which contains metal sulphide, graphite, metals or mixtures thereof and is at least partly absorbed by the support material is subsequently added.

2. Process according to Claim 1, **characterized in that** the support material and binder are homogenized in a mixer.

3. Process according to Claim 1 or 2, **characterized in that** the binder is added as a binder solution having a binder concentration in the range from 0.5% by weight to 50% by weight.

4. Process according to any of the preceding claims, **characterized in that** the mixing of support material and binder is carried out with a surface velocity of the particles from 5 m/sec to 50 m/sec.

5. Process according to any of the preceding claims, **characterized in that** the mixture is dried after addition and mixing-in of the functional material.

6. Process according to any of the preceding claims, **characterized in that** the degree of wetting of the support material with binder is in the range from 80 % to 100 %.

7. Process according to any of the preceding claims, **characterized in that** the support material has a specific surface area of from 20 m²/g to 80 m²/g.

8. Process according to any of the preceding claims, **characterized in that** the particle sizes of the support material are in the range from 90 µm to 1.5 mm, with the particle sizes of the support material having a normal distribution between these limits.

9. Process according to any of the preceding claims, **characterized in that** the support material contains a calcined mixture of diatoms and clay.

10. Process according to any of the preceding claims, **characterized in that** the binder contains starch, organic and/or inorganic constituents.

11. Friction material for a brake shoe of a motor vehicle which is obtainable according to any of Claims 1 to 10.

12. Brake shoe having a friction material according to Claim 11.

## Revendications

1. Procédé de fabrication d'une garniture de friction d'un segment de frein, selon lequel un liant est ajouté à un matériau support à pores ouverts présentant une surface spécifique élevée et des tailles de particules comprises entre 90 µm et 1,5 mm, qui contient des diatomées ou de l'argile ou un mélange calciné de diatomées et d'argile, et le matériau support et le liant sont mélangés jusqu'à ce que le matériau support soit mouillé en grande partie avec le liant, une matière fonctionnelle, qui contient un sulfure métallique, du graphite, des métaux ou leurs mélanges, étant ensuite ajoutée et absorbée au moins en partie par le matériau support.

2. Procédé selon la revendication 1, **caractérisé en ce que** le matériau support et le liant sont homogénéisés dans un mélangeur.

3. Procédé selon la revendication 1 ou 2, **caractérisé en ce que** le liant est ajouté sous la forme d'une solution de liant, la concentration en liant dans la solution de liant étant comprise entre 0,5 % en poids et 50 % en poids.

4. Procédé selon l'une quelconque des revendications précédentes, **caractérisé en ce que** le mélange du matériau support et du liant a lieu à une vitesse de surface des particules de 5 m/s à 50 m/s.

5. Procédé selon l'une quelconque des revendications précédentes, **caractérisé en ce que** le mélange est séché après l'ajout et le mélange de la matière fonctionnelle.

6. Procédé selon l'une quelconque des revendications précédentes, **caractérisé en ce que** le degré de mouillage du matériau support avec le liant est compris entre 80 % et 100 %.

7. Procédé selon l'une quelconque des revendications précédentes, **caractérisé en ce que** le matériau support présente une surface spécifique de 20 m²/g à 80 m²/g.

8. Procédé selon l'une quelconque des revendications précédentes, **caractérisé en ce que** les tailles de particules du matériau support sont comprises entre 90 µm et 1,5 mm, les tailles de particules du matériau support étant réparties normalement entre ces limites.

9. Procédé selon l'une quelconque des revendications précédentes, **caractérisé en ce que** le matériau support contient un mélange calciné de diatomées et d'argile.

10. Procédé selon l'une quelconque des revendications précédentes, **caractérisé en ce que** le liant contient de l'amidon, des constituants organiques et/ou inorganiques.

11. Matériau de friction pour un segment de frein d'un véhicule automobile, pouvant être obtenu selon l'une quelconque des revendications 1 à 10.

12. Segment de frein comprenant un matériau de friction selon la revendication 11.
